# EUROPÄISCHE PATENTSCHRIFT

(11) **EP 0 451 505 B1**
(45) Veröffentlichungstag und Bekanntmachung des Hinweises auf die Patenterteilung: **04.05.1994**
(21) Anmeldenummer: 91103460.1
(22) Anmeldetag: 07.03.1991
(51) Int. Cl.: G01D 5/245, G01B 7/00

(54) **Inkrementales Positions-messsystem**
Incremental position measuring system
Système de mesure de la position incrémentiel

(30) Priorität: 09.04.1990 DE 4011411
(43) Veröffentlichungstag der Anmeldung: 16.10.1991
(73) Patentinhaber: Dr. Johannes Heidenhain GmbH, D-83292 Traunreut (DE)
(72) Erfinder: Huber, Norbert, Dipl.-Ing., W-8225 Traunreut (DE); Graf, Simon, Dipl.-Ing., W-8269 Burgkirchen (DE)

(56) Entgegenhaltungen:
- DE-A- 2 747 208
- DE-B- 2 732 909

## Beschreibung

Die Erfindung betrifft ein inkrementales Positionsmeßsystem nach dem Oberbegriff des Anspruches 1.

Derartige Positionsmeßsysteme werden insbesondere bei numerischen Steuerungen zur Messung der Relativlage eines Werkzeuges bezüglich eines zu bearbeitenden Werkstücks sowie bei Koordinatenmeßmaschinen eingesetzt.

Bei inkrementalen Längen- oder Winkelmeßsystemen wird eine gitterartige inkrementale Meßteilung mit einer Abtasteinrichtung abgetastet und periodische Analogsignale erzeugt. Aus den periodischen Analogsignalen werden Rechtecksignale gebildet, die einem Vor-/ Rückwärtszähler zugeführt werden. Der Zählerstand gibt die Relativlage der zu messenden Objekte an. Bei Ausfall der Stromversorgung geht der Zählerstand und somit die Kenntnis der momentanen Relativlage verloren.

In der DE-A-27 47 208 und der DE-B-27 32 909 ist ein bekanntes Positionsmeßsystem beschrieben, bei dem nach einem Stromausfall eine Referenzmarke angefahren werden muß, dessen Absolutposition bekannt ist. Beim Überfahren dieser Referenzmarke wird der Vor-/Rückwärtszähler auf einen vorgegebenen Wert gesetzt und die Messung muß neu begonnen werden. Um dies zu vermeiden, wurde in der DE-A-27 47 208 und der DE-B-27 32 909 vorgeschlagen, bei einem inkrementalen Positionsmeßsystem eine Notstromversorgung bei Ausfall der Hauptstromversorgung vorzusehen.

Der Erfindung liegt die Aufgabe zugrunde, ein inkrementales Positionsmeßsystem so auszubilden, daß es störungssicher und stromsparend arbeitet und nach einem Ausfall der Haupt-Stromversorgung die absolute Relativlage zwischen den zu messenden Objekten schnell ausgeben kann.

Diese Aufgabe wird erfindungsgemäß durch die kennzeichnenden Merkmale des Anspruches 1 gelöst.

Die mit der Erfindung erzielten Vorteile bestehen insbesondere darin, daß nach einem Ausfall der Haupt-Stromversorgung die Relativlage wieder exakt vorliegt und mit einfachen Mitteln zählend an eine externe Einrichtung weitergegeben werden kann. Das Interface der externen Einrichtung kann daher einfach aufgebaut sein.

Vorteilhafte Ausbildungen der Erfindung entnimmt man den abhängigen Patentansprüchen.

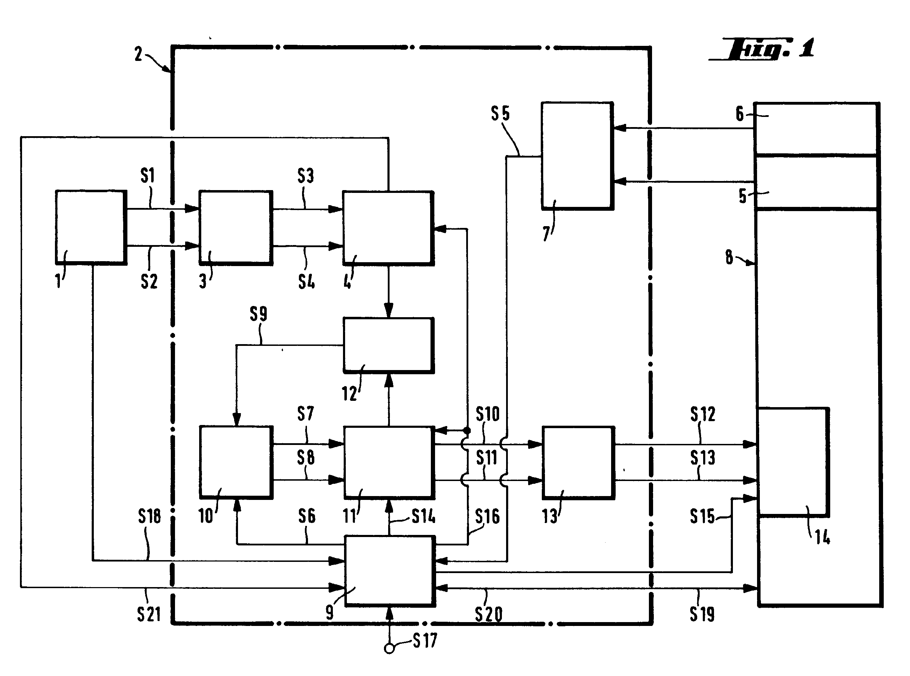

Ein Ausführungsbeispiel der Erfindung wird anhand des in Figur 1 gezeigten Blockschaltbildes näher erläutert.

Es zeigt schematisch eine an sich bekannte Abtasteinrichtung 1 zur Abtastung der Teilung eines Teilungsträgers. Die Abtasteinrichtung 1 gibt zwei um 90° gegeneinander phasenverschobene analoge Abtastsignale S1, S2 an eine Auswerteeinrichtung 2 ab. In Abhängigkeit der Bewegungsrichtung zwischen den zwei zu messenden Objekten werden in einem Richtungsdiskriminator 3 aus den zwei phasenverschobenen analogen Abtastsignalen S1, S2 Zählsignale S3, S4 gebildet.

Die Auswerteeinrichtung 2 enthält weiterhin einen Absolutwertzähler 4, dem laufend die Zählsignale S3, S4 zugeführt werden. Dieser Absolutwertzähler 4, der Richtungsdiskriminator 3 und die Abtasteinrichtung 1 werden laufend mit Strom versorgt, diese Stromversorgung kann beispielsweise besonders sparsam getaktet betrieben werden. Durch die laufende Stromversorgung ist garantiert, daß der Zählerstand des Absolutwertzählers 4 immer der aktuellen Relativlage entspricht und bei Bedarf ausgegeben werden kann.

Die Stromversorgung besteht aus einer Haupt-Stromversorgung 5 sowie einer Not-Stromversorgung 6. Beide Stromversorgungen 5 und 6 liegen an einer Überwachungseinrichtung 7 an. Diese Überwachungseinrichtung 7 prüft laufend den Spannungspegel der Haupt-Stromversorgung 5, sobald der Spannungspegel einen vorgegebenen Wert unterschreitet, wird von der Haupt-Stromversorgung 5 auf die Not-Stromversorgung 6 umgeschaltet. Die Haupt-Stromversorgung 5 ist beispielsweise in einer numerischen Steuerung 8 integriert und die Not-Stromversorgung 6 kann eine Batterie oder ein Speicherkondensator sein. Die Not-Stromversorgung 6 ist im gezeigten Beispiel ebenfalls in der numerischen Steuerung 8 enthalten.

Mit Hilfe der verschiedenen Betriebsarten soll nun der weitere Aufbau des inkrementalen Positionsmeßsystems erläutert werden.

### A) Normalbetrieb:

Normalbetrieb bedeutet, daß die Haupt-Stromversorgung 5 in Betrieb ist und einen Spannungspegel oberhalb des vorgegebenen Wertes aufweist. Die Überwachungseinrichtung 7 erkennt den Normalbetrieb und liefert ein Anzeigesignal S5 an eine Steuerlogik 9. Die Steuerlogik 9 aktiviert über das Steuersignal S6 einen Pulsgeber 10, der in Abhängigkeit des Zählerstandes des Absolutwertzählers 4 richtungsabhängige Zählsignale S7, S8 an einen Nachlaufzähler 11 abgibt. Die Zählerstände des Absolutwertzählers 4 und des Nachlaufzählers 11 werden mittels eines Komparators 12 laufend miteinander verglichen und der Komparator 12 veranlaßt den Pulsgeber 10 mittels des Steuersignals S9 solange Zählersignale S7, S8 in Form von Vor- oder Rückwärts-Zählimpulsen an den Nachlaufzähler 11 abzugeben, bis beide Zählerstände gleich sind.

Dem Nachlaufzähler 11 ist eine Einrichtung 13 nachgeordnet, die in Abhängigkeit der zugeführten Zählsignale S7, S8 die Ausgangssignale S10, S11 des Nachlaufzählers in zwei um 90° gegeneinander phasenverschobene Rechtecksignale S12, S13 wandelt. Diese Rechtecksignale S12, S13 stehen am Ausgang der Auswerteeinrichtung 2 an und werden im gezeigten Beispiel der numerischen Steuerung 8 zugeführt und in einem externen Zähler 14 richtungsabhängig gezählt. Die Einrichtung 13 kann auch dem Pulsgeber 10 nachgeordnet sein und aus den Zählsignalen S7, S8 zwei um 90° gegeneinander phasenverschobene Rechtecksignale S12, S13 bilden.

Es ist ersichtlich, daß im Normalbetrieb alle Bausteine des inkrementalen Positionsmeßsystems mit Strom versorgt werden müssen.

Wird der Zählerstand des Absolutwertzählers 4 Null, so wird vom Absolutwertzähler 4 ein Nullsignal S21 an die Steuerlogik 9 geleitet und bei gleichzeitigem Auftreten eines Referenzsignals S18 ein Nullimpuls S15 von der Auswerteeinrichtung 2 an den Zähler 14 geleitet, der daraufhin auf einen vorgegebenen Wert gesetzt wird.

### B) Notbetrieb:

Notbetrieb bedeutet, daß der Spannungspegel der Haupt-Stromversorgung 5 unter einen vorgegebenen Wert gefallen ist. In diesem Zustand werden zumindest die Abtasteinrichtung 1, der Richtungsdiskriminator 3, der Absolutwertzähler 4 die Überwachungseinrichtung 7 und die Steuerlogik 9 mit Strom versorgt. Die Überwachungseinrichtung 7 liefert ein Anzeigesignal S5 an die Steuerlogik 9, welche den Pulsgeber 10 über das Steuersignal S6 außer Betrieb setzt. Das Anzeigesignal S5 kann auch direkt zum Pulsgeber 10 geführt sein und ihn außer Betrieb setzen.

Im Notbetrieb stehen am Ausgang der Auswerteeinrichtung 2 keine Rechtecksignale S12, S13 an.

### C) Wiederanlegen der Haupt-Stromversorgung:

Sobald von der Überwachungseinrichtung 7 erkannt wird, daß die Spannung der Haupt-Stromversorgung 5 wieder den vorgegebenen Spannungspegel erreicht oder überschritten hat, wird vom Notbetrieb auf den Normalbetrieb umgeschaltet. Dabei werden folgende Schritte durchgeführt:
- die Überwachungseinrichtung 7 liefert ein Anzeigesignal S5 zur Steuerlogik 9;
- die Steuerlogik 9 liefert ein Resetsignal S14 an den Nachlaufzähler 11, der dadurch auf Null gesetzt wird;
- Ausgabe eines synthetisch erzeugten Nullimpulses S15 von der Auswerteeinrichtung 2 an den Zähler 14 der numerischen Steuerung 8, wodurch dieser Zähler 14 auf einen bestimmten Wert gesetzt wird;
- Aktivieren des Pulsgebers 10 und somit Starten des Nachlaufzählers 11;
- Abgabe von um 90° gegeneinander phasenverschobenen Rechtecksignalen S12, S13 aus der Auswerteeinrichtung 2 zum Zähler 14, bis der Komparator 12 den Gleichstand zwischen dem Absolutwertzähler 4 und dem Nachlaufzähler 11 festgestellt hat.

Mit diesem inkrementalen Positionsmeßsystem ist es besonders einfach, an beliebiger Stelle eine absolute Nullposition zu setzen. Wird beispielsweise als Teilungsträger ein Längenmaßstab mit mehreren Referenzmarken verwendet, so kann einer beliebigen Referenzmarke die absolute Nullposition zugeordnet werden. Hierzu wird bei Ablesung dieser ausgewählten Referenzmarke der Absolutwertzähler 4 und der Nachlaufzähler 11 mittels des Resetsignals S16 auf Null gesetzt. Die Auswahl der Referenzmarke kann dadurch erfolgen, daß an der Steuerlogik 9 ein Bezugssignal S17 anliegt, das mit dem Referenzsignal S18 logisch UND- verknüpft wird. Das Bezugssignal S17 wird vorzugsweise durch Antasten einer Bezugskante erzeugt. Das Resetsignal S16 wird also nur dann abgegeben, wenn gleichzeitig das Bezugssignal S17 und das Referenzsignal S18 an der Steuerlogik 9 anstehen.

Der Zähler 14 der numerischen Steuerung 8 wird beim Setzen bzw. beim Erkennen der absoluten Nullposition auf einen bestimmten Wert gesetzt, der vorzugsweise auch Null ist. Der Wert kann aber auch von Null abweichen, wenn die absolute Nullposition der numerischen Steuerung 8 nicht mit der absoluten Nullposition des Positionsmeßsystems übereinstimmt.

Das gleiche Verfahren ist beim Abtasten einer Teilscheibe mit einer Referenzmarke anwendbar. Hier wird die Referenzmarke nach einer bestimmten Anzahl von Umdrehungen beim Auftreten des Bezugssignals S17 als absolute Nullposition festgelegt.

Der Absolutwertzähler 4 besteht vorzugsweise aus zwei Zählern. Bei Verwendung eines Drehgebers als Positionsmeßsystem ist ein Zähler zur Erfassung der Umdrehungen und ein Zähler zur Erfassung der Position innerhalb einer Umdrehung vorgesehen. Bei Längenmeßsystemen kann mit dem ersten Zähler die Anzahl der Referenzmarken und mit dem zweiten Zähler die Position zwischen den Referenzmarken erfaßt werden.

Es wurde bereits ausführlich erläutert, daß mittels des Anzeigesignals S5 die Betriebsart von der Überwachungseinrichtung 7 zur Steuerlogik 9 gemeldet wird. Wenn die Überwachungseinrichtung 7 Normalbetrieb erkennt, wird von der Steuerlogik 9 und somit von der Auswerteeinrichtung 2 ein Bereitschaftssignal S19 zur numerischen Steuerung 8 geleitet. Die numerische Steuerung 8 oder der Zähler 14 meldet ebenfalls der Auswerteeinrichtung 2, mit dem Bereitschaftssignal S20, wenn Bereitschaft zum Empfang der phasenverschobenen Rechtecksignale S12, S13 besteht. Besonders vorteilhaft ist es, wenn auf Normalbetrieb nur dann umgestellt wird, wenn die Bereitschaftssignale S19 und S20 anstehen, dabei können beide Bereitschaftssignale S19 und S20 an einer Signalleitung anstehen. Diese Signalleitung wird somit bidirektional z.B. mittels einer Open Collector-Schaltung betrieben.

## Patentansprüche

1. Inkrementales Positionsmeßsystem zur Messung der Relativlage zweier Objekte, bei dem die Teilung eines Teilungsträgers von einer Abtasteinrichtung zur Erzeugung zueinander phasenverschobener periodischer Abtastsignale abgetastet wird und die Abtastsignale einer Auswerteeinrichtung zur Bildung von Zählsignalen zugeführt werden, wobei die Auswerteeinrichtung und die Abtasteinrichtung an einer Haupt-Stromversorgung sowie an einer Not-Stromversorgung anliegen, und eine Überwachungseinrichtung vorgesehen ist, die die Spannung der Haupt-Stromversorgung prüft und bei Unterschreiten eines vorgegebenen Spannungswertes die Auswerteeinrichtung von Normalbetrieb auf Notbetrieb umschaltet, dadurch gekennzeichnet, daß im Normalbetrieb und im Notbetrieb die Abtastsignale (S1, S2) einem Richtungsdiskriminator (3) zur Bildung der Zählsignale (S3, S4) zugeführt werden und die Zählsignale (S3, S4) in einem Absolutwertzähler (4) richtungsabhängig gezählt werden, daß dem Absolutwertzähler (4) ein Nachlaufzähler (11) zugeordnet ist, dem ausschließlich im Normalbetrieb Zählsignale (S7, S8) solange zuführbar sind, bis sein Zählerstand gleich dem Zählerstand des Absolutwertzählers (4) ist, und daß ausschließlich im Normalbetrieb eine Einrichtung (13) in Abhängigkeit der Zählerstände des Absolutwertzählers (4) und des Nachlaufzählers (11) phasenverschobene Rechtecksignale (S12, S13) bildet, die am Ausgang der Auswerteeinrichtung (2) anstehen und einer externen Einrichtung (8, 14) zuführbar sind.

2. Inkrementales Positionsmeßsystem nach Anspruch 1, dadurch gekennzeichnet, daß auf Normalbetrieb umgestellt wird, wenn an der Auswerteeinrichtung (2) zusätzlich ein Bereitschaftssignal (S20) von der externen Einrichtung (8, 14) anliegt.

3. Inkrementales Positionsmeßsystem nach Anspruch 1 oder 2, dadurch gekennzeichnet, daß dem Nachlaufzähler (11) die Zählsignale (S7, S8) von einem Pulsgeber (10) zuführbar sind, daß in einem Komparator (12) der Zählerstand des Absolutwertzählers (4) mit dem Zählerstand des Nachlaufzählers (11) vergleichbar ist, und daß dem Nachlaufzähler (11) oder dem Pulsgeber (10) eine Einrichtung (13) nachgeschaltet ist, die aus den Ausgangssignalen (S10, S11) des Nachlaufzählers (11) oder aus den Zählsignalen (S7, S8) des Pulsgebers (10) zwei zueinander phasenverschobene Rechtecksignale (S12, S13) bildet.

4. Inkrementales Positionsmeßsystem nach Anspruch 3, dadurch gekennzeichnet, daß eine Umschaltung vom Notbetrieb zum Normalbetrieb erfolgt, wenn die Überwachungseinrichtung (7) erkennt, daß die Haupt-Stromversorgung (5) den vorgegebenen Spannungswert wieder erreicht oder überschritten hat, daß nach der Umschaltung der Pulsgeber (10) Zählsignale (S7, S8) in Abhängigkeit des Vergleichsergebnisses zwischen dem Zählerstand des Nachlaufzählers (11) und des Absolutwertzählers (4) an den Nachlaufzähler (11) abgibt und die Einrichtung (13) zwei um 90° gegeneinander phasenverschobene Rechtecksignale (S12, S13) bildet.

5. Inkrementales Positionsmeßsystem nach einem der Ansprüche 1, 2, 3 oder 4, dadurch gekennzeichnet, daß die Auswerteeinrichtung (2) eine Steuerlogik (9) enthält, der ein Anzeigesignal (S5) von der Überwachungseinrichtung (7) zugeführt wird, welches anzeigt, ob auf Normal- oder Notbetrieb umgestellt ist.

6. Inkrementales Positionsmeßsystem nach Anspruch 5, dadurch gekennzeichnet, daß bei einer Umschaltung von Not- auf Normalbetrieb die Steuerlogik (9) dem Nachlaufzähler (11) ein Resetsignal (S14) zum Nullsetzen zuführt und den Pulsgeber (10) durch ein Steuersignal (S6) aktiviert.

7. Inkrementales Positionsmeßsystem nach Anspruch 6, dadurch gekennzeichnet, daß die Steuerlogik (9) dem Pulsgeber (10) das Steuersignal (S6) zum Stoppen des Pulsgebers (10) zuführt.

8. Inkrementales Positionsmeßsystem nach einem der Ansprüche 5, 6 oder 7, dadurch gekennzeichnet, daß der Steuerlogik (9) Referenzsignale (S18) der Abtasteinrichtung (1) und ein Bezugssignal (S17) zuführbar sind, und daß die Steuerlogik (9) bei gleichzeitigem Auftreten eines Referenzsignales (S18) und des Bezugssignales (S17) ein Resetsignal (S16) zum Nullsetzen an den Absolutwertzähler (4) und an den Nachlaufzähler (11) abgibt.

9. Inkrementales Positionsmeßsystem nach Anspruch 8, dadurch gekennzeichnet, daß bei gleichzeitigem Auftreten eines Referenzsignals (S18) und des Bezugssignals (S17) ein Nullimpuls (S15) von der Auswerteeinrichtung (2) abgegeben wird.

10. Inkrementales Positionsmeßsystem nach Anspruch 9, dadurch gekennzeichnet, daß dieser Nullimpuls (S15) einem Zähler (14) der externen Einrichtung (8) zugeführt wird, der daraufhin auf einen vorgegebenen Wert gesetzt wird.

11. Inkrementales Positionsmeßsystem nach einem der Ansprüche 2 bis 8, dadurch gekennzeichnet, daß am Ausgang der Auswerteeinrichtung (2) ein Nullimpuls (S15) zum Setzen eines Zählers (14) der externen Einrichtung (8) ansteht, wenn an der Auswerteeinrichtung (2) ein Referenzsignal (S18) der Abtasteinrichtung (1) anliegt und gleichzeitig der Absolutwertzähler (4) den Zählerstand Null aufweist.

12. Inkrementales Positionsmeßsystem nach Anspruch 10, dadurch gekennzeichnet, daß der Zähler (14) einer numerischen Steuerung (8) der externen Einrichtung zugeordnet ist, und daß der Steuerung (8) von der Auswerteeinrichtung (2) ein Bereitschaftssignal (S19) zuführbar ist, welches angibt, ob Not- oder Normalbetrieb vorliegt.

13. Inkrementales Positionsmeßsystem nach Anspruch 3, dadurch gekennzeichnet, daß wenn nach dem Notbetrieb die Spannung der Haupt-Stromversorgung (5) den vorgegebenen Spannungspegel wieder erreicht hat und zusätzlich das Bereitschaftssignal (S20) von der externen Einrichtung (8, 14) an der Auswerteeinrichtung (2) anliegt,
a) die Überwachungseinrichtung (7) ein Anzeigesignal (S5) an eine Steuerlogik (9) liefert;
b) die Steuerlogik (9) ein Resetsignal (S14) an den Nachlaufzähler (11) liefert, der dadurch auf Null gesetzt wird;
c) die Auswerteeinrichtung (2) einen Nullimpuls (S15) an die externe Einrichtung (8, 14) abgibt;
d) die Steuerlogik (9) den Pulsgeber (10) aktiviert und somit den Nachlaufzähler (11) startet und
e) die Einrichtung (13) solange zwei um 90° gegeneinander phasenverschobene Rechtecksignale (S12, S13) an die externe Einrichtung (8, 14) abgibt, bis der Zählerstand des Nachlaufzählers (11) den Zählerstand des Absolutwertzählers (4) erreicht hat.

14. Inkrementales Positionsmeßsystem nach Anspruch 1, dadurch gekennzeichnet, daß im Notbetrieb die Abtasteinheit (1) und die Auswerteeinrichtung (2) getaktet betrieben werden.

## Claims

1. Incremental position measuring system for measuring the relative position of two objects, in which the division of a division carrier is scanned by a scanning device in order to generate periodic scanning signals which are phase -offset to one another, and the scanning signals are passed to an evaluation device in order to form counter signals, the evaluation device and the scanning device being connected to a main voltage supply and also to an emergency voltage supply, and a monitoring device is provided which monitors the voltage of the main voltage supply and, when the said main supply falls below a predetermined voltage value, the evaluating device switches over from normal operation to emergency operation, characterised in that in normal and in emergency operation, the scanner signals (S1, S2) are passed to a direction discriminator (3) in order to form the counter signals (S3, S4), and the counter signals (S3, S4) are counted in dependence on direction in an absolute-value counter (4), in that there is associated with the absolute-value counter (4) a tracking counter (11), to which counter signals (S7, S8) may be passed exclusively during normal operation until its counter condition is equal to the counter condition of the absolute-value counter (4), and in that, exclusively during normal operation, a device (13), in dependence on the counter conditions of the absolute-value counter (4) and of the tracking counter (11), forms phase-offset square wave signals (S12, S13) which appear at the output of the evaluating device (2), and may be passed to an external device (8, 14).

2. Incremental position measuring system according to claim 1, characterised in that the system is switched to normal operation when in addition a ready signal (S20) from the external device (8, 14) appears at the evaluating device (2).

3. Incremental position measuring system according to claim 1 or 2, characterised in that the counter signals (S7, S7) may be passed to the tracking counter (11) by a pulse emitter (10), in that the counter condition of the absolute-value counter (4) may be compared in a comparator ((12) with the counter condition of the tracking counter (11), and in that there is incorporated after the tracking counter (11) of after the pulse emitter (10) a device (13) which forms from the output signals (S10, S11) of the tracking counter (11) or from the counter signals (S7, S8) of the pulse emitter (10), two square wave signals (S112, S13) which are phase-offset to one another.

4. Incremental position measuring system according to claim 3, characterised in that the system switches over from emergency operation to normal operation when the monitoring device (7) recognises that the main voltage supply (5) has again reached or exceeded the predetermined voltage value, in that, after this switch-over, the pulse emitter (10) emits counter signals (S7, S8) in dependence on the result of comparison between the counter condition of the tracking counter (11) and that of the absolute-value counter (4), to the tracking counter (11), and the device (13) forms two square wave signals (S12, S13) which are offset to one another by 90°.

5. Incremental position measuring system according to one of claims 1, 2, 3 or 4, characterised in that the evaluating device (3) includes a logical control system (9), to which there is passed by the monitoring device (7) an indication signal (S5) which indicates whether the overall system has been switched to normal or to emergency operation.

6. Incremental position measuring system according to claim 5, characterised in that , upon switch-over from emergency to normal operation, the logical control system (9) passes to the tracking counter (11) a reset signal (S14) for zero-setting, and actuates the pulse emitter (10) by means of a control signal (S6).

7. Incremental position measuring system according to claim 6, characterised in that the logical control system (9) passes to the pulse emitter (10) the control signal (S6) for stopping the pulse emitter (10).

8. Incremental position measuring system according to one of claims 5, 6 or 7, characterised in that there may be passed to the logical control system (9) standard signals (S18) from the scanning device (1) and a reference signal (S17), and in that, upon simultaneous occurrence of a standard signal (S18) and of a reference signal (S17), the logical control system (9) passes a reset signal (S16) for zero-setting to the absolute-value counter (4) and to the tracking counter (11).

9. Incremental position measuring system according to claim 8, characterised in that, upon simultaneous occurrence of a standard signal (S18) and of the reference signal (S17), a zero pulse (S15) is emitted by the evaluating device (2).

10. Incremental position measuring system according to claim 9, characterised in that this zero pulse (S15) is passed to a counter (14) of the external device (8), said counter (14) thereupon being set to a predetermined value.

11. Incremental position measuring device according to one of claims 2 to 8, characterised in that there appears at the output of the evaluating device (2) a zero pulse (S15) for setting a counter (14) of the external device (8) when a standard signal (S18) from the scanning device (1) appears at the evaluating device (1), and the absolute-value counter (4) at the same time has the zero counter condition.

12. Incremental position measuring system according to claim 10, characterised in that the counter (14) is associated with a numerical control system (8) of the external device, and in that there may be passed to said control system (8) by the evaluating device (2) a ready signal (S19), which indicates whether the overall system is in emergency or in normal operation.

13. Incremental position measuring system according to claim 3, characterised in that when, after emergency operation, the voltage of the main voltage supply (5) has again reached the predetermined voltage level, and in addition the ready signal (S20) from the external device (8, 14) is present at the evaluating device (2),
a) the monitoring device (7) supplies an indicator signal (S5) to a logical control system (9);
b) the logical control system (9) supplies a reset signal (S14) to the tracking counter (11), which is thereby set to zero;
c) the evaluating device (2) passes a zero pulse (S15) to the external device (8, 14);
d) the logical control system (9) actuates the pulse emitter (10), thus starting the tracking counter, and
e) the device (13) passes two square wave signals (S12, S13), phase-offset to one another by 90°, to the external device (8, 14), until the counter condition of the tracking counter (11) has reached the counter condition of the absolute-value counter (4).

14. Incremental position measuring system according to claim 1, characterised in that, in emergency operation, the scanning unit (1) and the evaluating device (2) are operated in a clock-pulsed manner.

## Revendications

1. Dispositif de mesure de position incrémental pour mesurer la position relative de deux objets, dans lequel la graduation d'un support de graduation est lue par un dispositif de lecture pour produire des signaux de lecture périodiques mutuellement déphasés et les signaux de lecture sont transmis à un dispositif d'exploitation pour former des signaux de comptage, dans lequel le dispositif d'exploitation et le dispositif de lecture sont connectés à une alimentation électrique principale ainsi qu'à une alimentation électrique de secours et dans lequel il est prévu un dispositif de surveillance qui contrôle la tension de l'alimentation électrique principale et, lorsque celle-ci descend en-dessous d'une valeur prédéterminée, commute le dispositif d'exploitation du fonctionnement normal en fonctionnement de secours, caractérisé par le fait qu'en fonctionnement normal et en fonctionnement de secours, les signaux de lecture (S1, S2) sont transmis à un discriminateur de direction (3) pour former les signaux de comptage (S3, S4) et les signaux de comptage (S3, S4) sont comptés dans un compteur à valeur absolue (4) en fonction de la direction, par le fait qu'au compteur à valeur absolue (4) est associé un compteur suiveur (11) auquel sont envoyés, en fonctionnement normal exclusivement, des signaux de comptage (S7, S8) jusqu'à ce que sa position soit égale à celle du compteur à valeur absolue (4) et par le fait qu'en fonctionnement normal exclusivement, un dispositif (13) génère des signaux carrés (S12, S13) déphasés en fonction des positions du compteur à valeur absolue (4) et du compteur suiveur (11), lesquels signaux sont disponibles à la sortie du dispositif d'exploitation (2) et peuvent être transmis à un dispositif externe (8, 14).

2. Dispositif de mesure de position incrémental selon la revendication 1, caractérisé par le fait que le passage en fonctionnement de secours est opéré lorsqu'un signal de disponibilité (S20) est envoyé au dispositif d'exploitation (2) par le dispositif externe (8, 14).

3. Dispositif de mesure de position incrémental selon la revendication 1 ou 2, caractérisé par le fait que les signaux de comptage (S7, S8) d'un générateur d'impulsions (10) peuvent être transmis au compteur-suiveur (11), par le fait que la position du compteur à valeur absolue (4) peut être comparée à la position du compteur suiveur (11) dans un comparateur (12) et par le fait qu'un dispositif (13) est placé à la suite du compteur suiveur (11) ou du générateur d'impulsions (10), lequel dispositif forme à partir des signaux de sortie (S10, S11) du compteur suiveur (11) ou des signaux de comptage (S7, S8) du générateur d'impulsions (10) deux signaux carrés (S12, S13) mutuellement déphasés.

4. Dispositif de mesure incrémental selon la revendication 3, caractérisé par le fait qu'une commutation du fonctionnement de secours vers le fonctionnement normal est opérée lorsque le dispositif de surveillance (7) détecte que l'alimentation électrique principale (5) a de nouveau atteint ou dépassé la tension prédéterminée, par le fait qu'après la commutation, le générateur d'impulsions (10) délivre des signaux de comptage (S7, S8) en fonction du résultat de la comparaison des positions du compteur suiveur (11) et du compteur à valeur absolue (4) et le dispositif (13) forme deux signaux carrés (S12, S13) mutuellement déphasés de 90°.

5. Dispositif de mesure incrémental selon l'une des revendications 1, 2, 3 ou 4, caractérisé par le fait que le dispositif d'exploitation (2) contient un circuit logique de commande (9) à laquelle le dispositif de surveillance (7) envoie un signal d'affichage (S5) qui indique si le dispositif est commuté en fonctionnement normal en fonctionnement de secours.

6. Dispositif de mesure incrémental selon la revendication 5, caractérisé par le fait que lors d'une commutation du fonctionnement de secours en fonctionnement normal, le circuit logique de commande (9) envoie au compteur suiveur (11) un signal de remise à zéro (S14) à des fins de remise à zéro et active le générateur d'impulsions (10) par un signal de commande (S6).

7. Dispositif de mesure incrémental selon la revendication 6, caractérisé par le fait que le circuit logique de commande (9) envoie au générateur d'impulsions (10) le signal de commande (S6) aux fins d'arrêter le générateur d'impulsions (10).

8. Dispositif de mesure incrémental selon l'une des revendications 5, 6 ou 7 caractérisé par le fait que des signaux de référence (S18) du dispositif d'exploitation (1) et un signal de référence (S17) peuvent être transmis au circuit logique de commande (9) et par le fait que le circuit logique de commande (9), lors de la présence simultanée d'un signal de référence (S18) et du signal de référence (S17), délivre un signal de remise à zéro (S16) au compteur à valeur absolue (4) et au compteur suiveur (11) aux fins de remise à zéro de ceux-ci.

9. Dispositif de mesure incrémental selon la revendication 8, caractérisé par le fait que lors de la présence simultanée d'un signal de référence (S18) et du signal de référence (S17), le dispositif d'exploitation (2) délivre une impulsion zéro (S15).

10. Dispositif de mesure incrémental selon la revendication 9, caractérisé par le fait que l'impulsion zéro (S15) est envoyée à un compteur (14) du dispositif externe (8) qui est alors amené à une valeur prédéterminée.

11. Dispositif de mesure incrémental selon l'une des revendications 2 à 8, caractérisé par le fait qu'une impulsion zéro (S15) destinée au réglage d'un compteur (14) du dispositif (8) externe est disponible à la sortie du dispositif d'exploitation (2) chaque fois qu'un signal de référence (S18) du dispositif de lecture (1) est appliqué au dispositif d'exploitation (2) et que simultanément le compteur à valeur absolue (4) présente la position zéro.

12. Dispositif de mesure incrémental selon la revendication 10, caractérisé par le fait que le compteur (14) est associé à une commande numérique (8) du dispositif externe et par le fait qu'un signal de disponibilité (S19) qui indique s'il s'agit du fonctionnement de secours ou du fonctionnement normal peut être envoyé au dispositif de commande (8) par le dispositif d'exploitation (2).

13. Dispositif de mesure incrémental selon la revendication 3, caractérisé par le fait que, lorsqu'à la suite du fonctionnement de secours la tension de l'alimentation électrique principale (5) atteint de nouveau le niveau prédéterminé et que le signal de disponibilité (S20) du dispositif externe (8, 14) est disponible au niveau du dispositif d'exploitation (2),
a) le dispositif de surveillance (7) délivre un signal d'affichage (S5) à un circuit logique de commande (9);
b) le circuit logique de commande (9) délivre un signal de remise à zéro au compteur suiveur (11) qui est ainsi mis à zéro;
c) le dispositif d'exploitation (2) délivre une impulsion zéro (S15) au dispositif externe (8, 14);
d) le circuit logique de commande (9) active le générateur d'impulsions (10) et le compteur suiveur (11) démarre;
e) le dispositif (13) délivre au dispositif externe (8, 14) des signaux carrés (S12, S13) mutuellement déphasés de 90° jusqu'à ce que la position du compteur suiveur (11) ait atteint la position du compteur à valeur absolue (4).

14. Dispositif de mesure incrémental selon la revendication 1, caractérisé par le fait qu'en fonctionnement de secours, l'unité de lecture (1) et le dispositif d'exploitation (2) fonctionnent de manière synchrone.
